# EUROPEAN PATENT APPLICATION

(11) **EP 1 521 114 A1**
(43) Date of publication of application: **06.04.2005**
(21) Application number: 04255870.0
(22) Date of filing: 25.09.2004
(51) Int. Cl.: G02F 1/1335, G02B 5/10, G02B 5/09

(54) **Reflector and liquid crystal display device using the same**

(30) Priority: 02.10.2003 JP 2003344916
(71) Applicant: ALPS ELECTRIC CO., LTD., Ota-ku Tokyo 145 (JP)
(72) Inventor: Yoshii, Katsumasa c/o Alps Electric Co Ltd, Otsuka-cho Ota-ku Tokyo (JP)
(74) Representative: Kensett, John Hinton

(57) **Abstract**

A reflector (47) is formed such that a plurality of large-diameter concave portions (70) having light reflectivity are formed on a surface of a metal film formed on a base material in irregular pitches, a plurality of small-diameter concave portions (60) each having a diameter smaller than that of the large-diameter concave portion (70) are formed between the large-diameter concave portions (70), an inner surface of the large-diameter concave portion (70) has a curved surface which is a portion of a sphere or a non-sphere, an inner surface of the small-diameter concave portion (60) has a curved surface which is a portion of a sphere or a non-sphere, and, in the metal film formed with the plurality of the large-diameter concave portions (70) and the plurality of the small-diameter concave portions (60) on the surface thereof, the inclination of a sectional curved line of a vertical surface at the boundary of the adjacent concave portions is discontinuous. The liquid crystal display device is formed such that the reflector (47) is attached on an inside or an outside of the liquid crystal cell.

## Description

### BACKGROUND OF THE INVENTION

### 1. Field of the Invention

The present invention relates to a reflector and a liquid crystal display device using the same.

### 2. Description of the Related Art

Generally, liquid crystal display devices are classified into different types such as a transflective liquid crystal display device having a back light unit, a transmissive liquid crystal display device, and a reflective liquid crystal display device. The reflective liquid crystal display device performs display without the back light unit, instead it makes use of external light such as solar light or illumination light, and is mainly used in, for example, a thin personal digital assistant having light weight and low power consumption. While, the transflective liquid crystal display device operates in a transmissive mode by turning on a back light unit when external light is not sufficient obtained and operates in a reflective mode without turning on the back light unit in the presence of sufficient external light, and is mainly used in a portable electronic equipment such as a portable telephone or a notebook computer.

In the display performance of the transflective or the reflective liquid crystal display device, a bright display performance is typically required in the reflective mode. In order to accomplish this, it is important that the light input from the outside is reflected in the liquid crystal panel and the scattering performance of the light emitted to the outside is controlled. Thereby, in order to reflect the incident light through various angles to the display direction (viewer side) with respect to the display surface in these liquid crystal display device, the liquid crystal display device is often implemented with a method for causing the reflecting plate on the inside or the outside of the liquid crystal panel to have a scattering function or with a forward scattering method in which a scattering layer is formed in the liquid crystal panel to scatter the transmitted light.

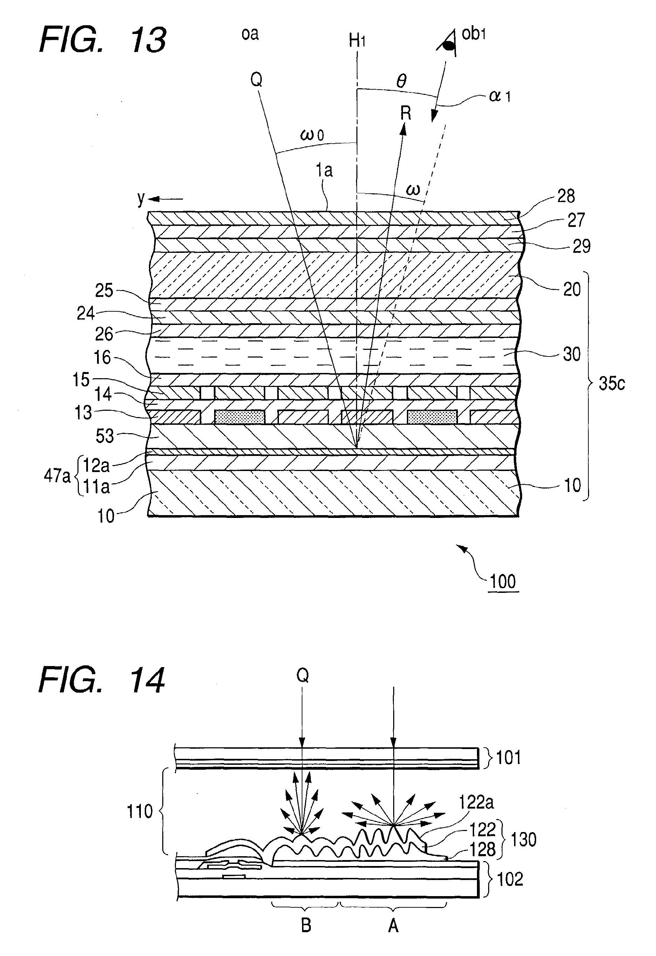

Fig. 14 is a side cross-sectional view representing an example of a conventional reflective liquid crystal display device provided with a reflecting plate having the scattering function in the liquid crystal display panel (for example, see Japanese Patent No. 3019058).

The reflective liquid crystal display device comprises an opposite transmissive substrate 101, a liquid crystal layer 110, and a reflective element substrate 102 in this order when viewed from the incident direction of the light. The element substrate 102 is provided with a scattering band for reflecting and scattering the light Q transmitting the opposite substrate 101. The scattering band is composed of a high reflective metal film 122 having irregularities 122a at the surface thereof and a reflecting plate 130 which is made of an insulating layer 128 below the metal film. One pixel of the reflecting plate 130 is divided into two regions, that is, a region B having reflective characteristics of high directivity and a region A having reflective characteristics of high diffusivity. Each region is formed with irregularities each having a different average inclination angle.

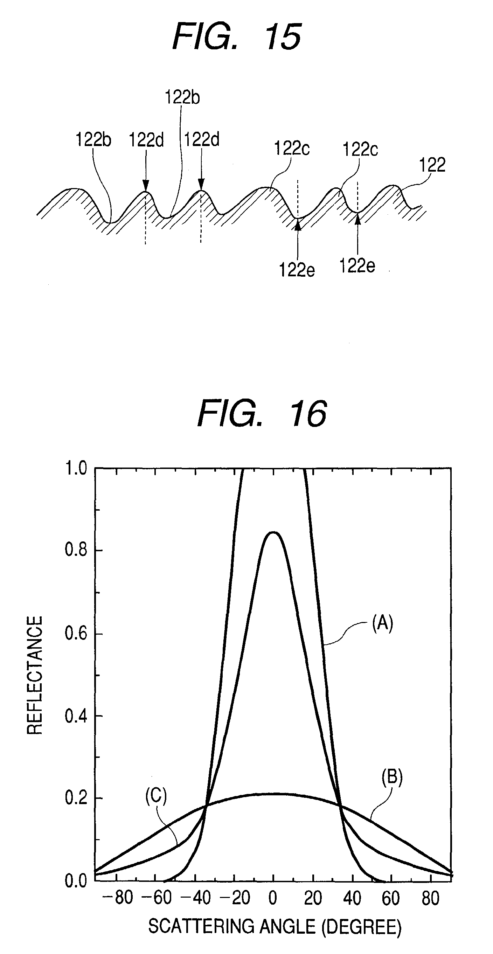

The reflecting plate 130 is manufactured by forming initial irregularities on a glass or silicon oxide film by a sand blast method, etching it in hydrofluoric acid solution, and forming an A1 film thereon. As shown in Fig. 15, a connecting portion (boundary) 122e between convex portions 122c of the high reflective metal film 122 has a curved surface, and the connecting portion 122d between convex portions 122b also has a curved surface. Accordingly, the inclination of the sectional curve of the vertical section of the high reflective metal film 122 is continuous, that is, a first-order derivative of the sectional curve of the vertical section is continuous.

Fig. 16 represents the reflecting characteristics of the reflecting plate included in the reflective liquid crystal display device in Fig. 14, in which the curve A in Fig. 16 is the reflecting characteristic of the region B shown in Fig. 14 and the curve B in Fig. 16 is the reflecting characteristic of the region A shown in Fig. 14. Here, these reflecting characteristics are obtained by fixing white light source in the normal direction to the reflecting plate surface, rotating a detector for measuring the intensity of the reflected light, and measuring the dependency of the emitted angle of the reflected light. The reflecting characteristics A, B represents the reflecting characteristics of Gaussian distribution for the specular reflection angle of the incident light, respectively. The final reflecting characteristic of one pixel represents the reflecting characteristic C shown in Fig. 16, and also represents Gaussian-distribution-reflecting characteristic for the specular direction of the incident light.

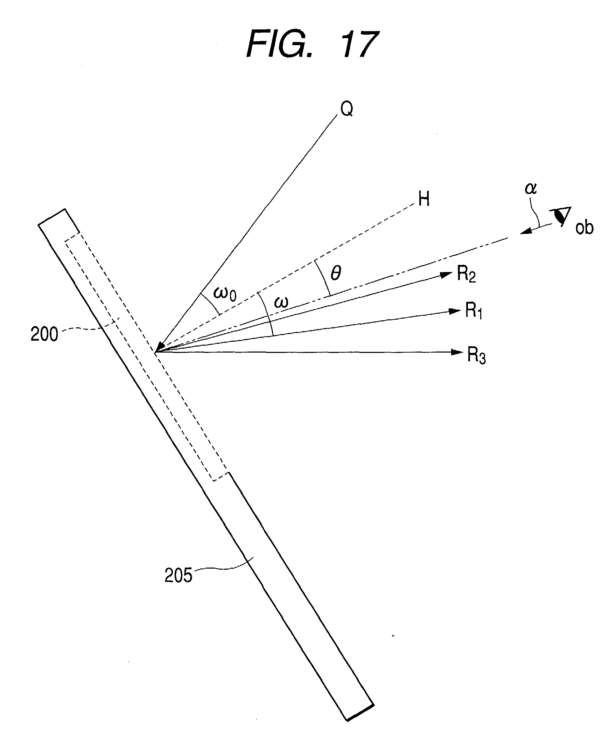

However, in case that the liquid crystal display device is accommodated in the display portion of an electronic equipment used in a state that the display surface thereof is oblique, such as a portable telephone or the notebook computer, it is mainly viewed from the direction close to the normal direction H to the display surface, as shown in Fig. 17. Also, the angle θ between the viewing direction α when the viewer (user) views the display surface (screen) and the normal direction H is usually in a range of 0° to 20°.

Fig. 17 illustrates a state using the portable electronic equipment in which a display portion 200 composed of the liquid crystal display device is included in the main body 205. In Fig. 17, H is the normal line for the display portion 200, Q is the incident light, and ω₀ is the incident angle (for example, the angle of 30° or less). In addition, R₁ is the reflected light (specular reflecting light) when the incident angle ω₀ is equal to reflected angle ω, R₂ is the reflected light when ω is less than incident angle ω₀, and R₃ is the reflected light when ω is more than the incident angle ω₀.

As it can be seen from the drawing, the viewing direction ob of the viewer is generally lies in the direction of the reflected light R₂ close to the normal direction H, and, more specifically, the direction in a range from the normal direction H to 10°. As such, the reflected light R₁, R₃ becomes the direction for viewing the display surface, and thus it is typically difficult to view the display surface. Accordingly, in view of providing a clear visibility to a viewer, it is required that wide viewing angle should be wide and the reflection intensity (reflectivity) of the direction of the reflecting angle smaller than the specular reflection angle should be high.

However, in the conventional reflective liquid crystal display device shown in Fig. 14, since most of the incident light is reflected in the direction of the specular reflection or the periphery thereof (Gaussian distribution type reflecting characteristics are represented (See Fig. 16)), the display surface viewed from the specular reflection direction is generally bright, but the display surface viewed from other directions (especially, the direction close to the normal direction H to the display surface) has a more darker direction H to the display surface) has a more darker view. Also, if the viewing angle is increased in order to efficiently receive the light incident from a more inclined direction (the incident light of which the angle from the normal direction is beyond 45°), the reflectivity totally deteriorates to darken the display surface.

### SUMMARY OF THE INVENTION

An object of the present invention is to provide a reflector of which the viewing angle characteristics for the reflected light intensity can become wide and the intensity of the reflected light in a direction having a reflection angle smaller than the specular-reflection angle can be improved.

In addition, the another object of the present invention is to provide a liquid crystal display device of which the viewing angle characteristics for a reflected light intensity can become wide and the visibility can be improved when the display surface is viewed from the direction close to the normal direction for the display surface of the liquid crystal display device.

In order to accomplish the above-mentioned objects, the present invention provides the following configuration.

According to an aspect of the present invention there is provided a reflector having a plurality of large-diameter concave portions having light reflectivity are formed on a surface of a base material or a metal film formed on the base material in irregular pitches, a plurality of small-diameter concave portions each having a diameter smaller than that of the large-diameter concave portion are formed between the large-diameter concave portions, an inner surface of the large-diameter concave portion has a curved surface which is a portion of a sphere or a non-sphere, an inner surface of the small-diameter concave portion has a curved surface which is a portion of a sphere or a non-sphere, and, in the metal film or the base material having formed with the plurality of the large-diameter concave portions and the plurality of the small-diameter concave portions on the surface thereof, an inclination of the sectional curved line of the vertical surface between the adjacent concave portions or at the boundary of the concave portions is discontinuous.

Since a plurality of large-diameter concave portions having light reflectivity are formed on a surface of a base material and on a metal film formed on the base material in irregular pitches, the reflection intensity (reflectivity) in a direction having a reflecting angle smaller than the specular reflection angle can be improved. Also, since a plurality of small-diameter concave portions each having a diameter smaller than that of the large-diameter concave portion are formed between the large-diameter concave portions, the base of the graph representing the viewing angle characteristic of the reflection intensity can become sufficiently wide, thereby the incident light from the inclination direction (for example, the incident light of which the angle from the normal direction is beyond 45°) can be efficiently reflected in the main viewing direction of the user (the direction close to the line of the sight of the user).

According to the above aspect of the present invention, it is possible to provide a reflector, which has reflection characteristics of which the intensity of the reflected light is high through a wide angle range and the incident light at various angles is reflected and collected to the viewing direction.

According to another aspect of the present invention there is provided a reflector having a plurality of large-diameter convex portions having light reflectivity are formed on a surface of a base material or a metal film formed on the base material in irregular pitches, a plurality of small-diameter convex portions each having a diameter smaller than that of the large-diameter convex portion are formed between the large-diameter convex portions, an outer surface of the large-diameter convex portion has a curved surface which is a portion of a sphere or a non-sphere, an outer surface of the small-diameter convex portion has a curved surface which is a portion of a sphere or a non-sphere, and, in the metal film or the base material having formed with the plurality of the large-diameter convex portions and the plurality of the small-diameter convex portions on the surface thereof, an inclination of the sectional curve of the vertical surface between the adjacent convex portions or at the boundary of the convex portions is discontinuous.

Since a plurality of large-diameter convex portions having light reflectivity are formed on the surface of a base material or on a metal film formed on the base material in irregular pitches, the reflection intensity (reflectivity) in the direction having a reflecting angle smaller than the specular reflection angle can be improved. Also, since a plurality of small-diameter convex portions each having a diameter smaller than that of the large-diameter convex portion are formed between the large-diameter convex portions, the base of the graph representing the viewing angle characteristics for the reflectivity can become sufficiently wide, thereby the incident light from the inclination direction (for example, the incident light of which the angle in the normal direction is beyond 45°) can be efficiently reflected to the main viewing direction of the user (the direction close to the line of the sight of the user).

According to the second aspect of the present invention, it is possible to provide a reflector, which has reflection characteristics of which the intensity of the reflected light is high through a wide angle range and the incident light having various angles is reflected and collected to the viewing direction.

Preferably, the area ratio of the plurality of the large-diameter concave portions to the plurality of the small-diameter concave portions or the area ratio of the plurality of the large-diameter convex portions to the plurality of the small-diameter convex portions is about 1:1 to 400:1 in the metal film or the base material.

Preferably, the diameter of the large-diameter concave portion or the large-diameter convex portion is in a range of about 5 µm to 100 µm, and the thickness or the height thereof is in a range of about 0.1 µm to 3 µm.

Preferably, the inner surface of the large-diameter concave portion or the outer surface of the large-diameter convex portion has a curved surface which is a portion of a sphere, the inclination angle distribution of the curved surface is in a range of about -30° to about +30°.

Preferably, the inner surface of the large-diameter concave portion or the outer surface of the large-diameter convex portion has a curved surface which is a portion of a non-sphere, the inclination angle in one side of the large-diameter concave portion or the large-diameter convex portion (the absolute value of the angle between the tangent plane and the surface of the base material in any point of the curved surface) becomes maximum.

Preferably, the inner surface of the small-diameter concave portion or the outer surface of the small-diameter convex portion has a curved surface which is a portion a sphere or a non-sphere having a radius of the curvature of about 1 µm to abut 11 µm, and the maximum inclination angle of the curved surface is in a range of about 15° to about 60°.

In the present invention, the inclination angle represents the sectional inclination of a minute region of 0.5 µm (generally, measured by a precise roughness meter or an AFM) when the main section of the concave portion or the convex portion is viewed.

According to another aspect of the present invention there is provided a liquid crystal display device comprising: a liquid crystal cell, wherein an electrode and an alignment film are provided on an inner surface of one substrate (second substrate) which is at an viewing side between a pair of opposite substrates through a liquid crystal layer sandwiched therebetween and another electrode and alignment film are provided on an inner surface of the other substrate (first substrate) far from the viewing side, and wherein the reflector according to the first or second aspect is provided between the first substrate and the alignment film provided on the inner surface thereof or on the outer surface of the first substrate.

Here, since the first or second reflector which has reflection characteristics in which the intensity of the reflected light becomes high in a wide angle range and the incident light having various angles is reflected and collected to the viewing direction is included, the intensity of the reflected light becomes high in a wide angle range, and the display surface is bright when it is viewed the direction close to the normal direction for the display surface of the liquid crystal display device, and thus the visibility can be improved.

According to a still further aspect of the present invention, there is provided a liquid crystal display device comprising: a liquid crystal cell, wherein an electrode and an alignment film are provided on an inner surface of one substrate (second substrate) which is at an viewing side between a pair of opposite substrates through a liquid crystal layer sandwiched therebetween and another electrode and an alignment film are provided on an inner surface of the other substrate (first substrate) far from the viewing side, wherein a reflector is provided between the first substrate and the polarization film provided on the inner surface thereof and the outer surface of the other substrate, and a light scattering layer is provided on one substrate, wherein the reflector is formed such that a plurality of large-diameter concave portions or plurality of large-diameter convex portions having light reflectivity are formed on a surface of a base material or on a metal film formed on the base material in irregular pitches, an inner surface of the large-diameter concave portion or the outer surface of the large-diameter convex portion has a curved surface which is a portion of a sphere or a non-sphere, and, in the metal film or the base material formed with the plurality of the large-diameter concave portions or the plurality of the large-diameter convex portions on the surface thereof, the inclination of the sectional curved line of the vertical surface at the boundary of the adjacent concave portions or convex portions is discontinuous, and wherein the light scattering layer is made by dispersing fine particles in a matrix composed of transparent resin or transparent adhesive.

Since the above-mentioned reflector is attached at the inside or the outside of the liquid crystal cell, the reflection intensity (reflectivity) in the direction having an angle smaller than the specular reflection angle can be improved. Also, since the light scattering layer is provided on the outside of the liquid crystal cell, the light is scattered when the light reflected from the reflector passes through the light scattering layer, and thus the range of the reflecting angle can be enlarged.

Also, the intensity of the reflected light can be high through the wide angle range, and the display surface is bright when it is viewed at the direction close to the normal direction for the display surface of the liquid crystal display device to improve the visibility.

Preferably, the haze ratio of the light scattering layer is in a range of about 15% to about 30%.

Here, the haze ratio becomes an index of the degree of the light scattering. When the light scattering property of the light scattering layer is too much, the display characteristics in the display screen is remarkably deteriorated, and, when the light scattering property of the light scattering layer is too little, the moiré can be generated in the display screen. When the haze of the light scattering layer is in a range of about 15% to about 30%, the deterioration of the display characteristics of the liquid crystal display device can be suppressed and the moiré can be prevented in the display screen.

As mentioned above, according to the present invention, it is possible to provide a reflector capable of widening a viewing angle characteristics for the reflected light intensity and capable of increasing the intensity of the reflected light (reflectivity) in the direction having a reflecting angle smaller than the specular reflection angle.

Also, according to the liquid crystal display device of the present invention, it is possible to widen the range of viewing angle in which a display can be seen brightly and the visibility can be improved when the display surface is viewed in the direction close to the normal direction for the display surface of the liquid crystal display device.

Embodiments of the invention will now be described, by way of example only, with reference to the accompanying drawings, in which:
Fig. 1 represents a partial cross-sectional structure of a reflective liquid crystal display device according to a first embodiment of the present invention;
Fig. 2 is an enlarged cross-sectional view showing a portion of a reflector included in the liquid crystal display device in Fig. 1;
Fig. 3 is a plan view showing a portion of the reflector included in the liquid crystal display device in Fig. 1;
Fig. 4 is a perspective view showing one large-diameter concave portion formed in a metal reflecting film of the reflector included in the liquid crystal display device in Fig. 1;
Fig. 5 is a cross-sectional view of the large-diameter concave portion in Fig. 4, along the Y-axis direction;
Fig. 6 is a perspective view showing one of the large-diameter concave portions of a second example formed in the metal reflecting film of the reflector included in the liquid crystal display device in Fig. 1;
Fig. 7 is a cross-sectional view of the large-diameter concave portion in Fig. 6, along the Y-axis direction;
Fig. 8 is a cross-sectional view of the large-diameter concave portion in Fig. 6, along the X-axis direction;
Fig. 9 is a perspective view showing one of the large-diameter concave portions of a third example formed in the metal reflecting film in the liquid crystal display device according to the present invention;
Fig. 10 shows reflection characteristics of the reflector formed with a small-diameter concave portion between the large-diameter concave portions (Embodiment 1), a reflector without the small-diameter concave portion (Reference example 1), and a conventional reflecting plate (Comparative example 1);
Fig. 11 is a plan view showing a portion of the reflector of the Reference example 1;
Fig. 12 shows reflection characteristics of the reflector formed with the large-diameter concave portion in Fig. 6 and the reflector formed with the large-diameter concave portion in Fig. 9;
Fig. 13 represents a partial cross-sectional structure of the reflective liquid crystal display device according to a second embodiment of the present invention;
Fig. 14 is a side cross-sectional view showing an example of a conventional reflective liquid crystal display device;
Fig. 15 is a cross-sectional view showing a reflecting layer of the reflector included in the reflective liquid crystal display device in Fig. 14;
Fig. 16 shows the reflection characteristics of the reflecting plate included in the reflective liquid crystal display device in Fig. 14; and
Fig. 17 illustrates a state in which a liquid crystal display device is implemented in a portable electronic equipment.

### DESCRIPTION OF THE PREFERRED EMBODIMENT

Hereinafter, embodiments of the present invention will now be described with reference to the drawings. In the below drawings, the film thickness or the size ratio of each of the components is adequately set in order to easily understand the drawings.

### (Embodiment 1)

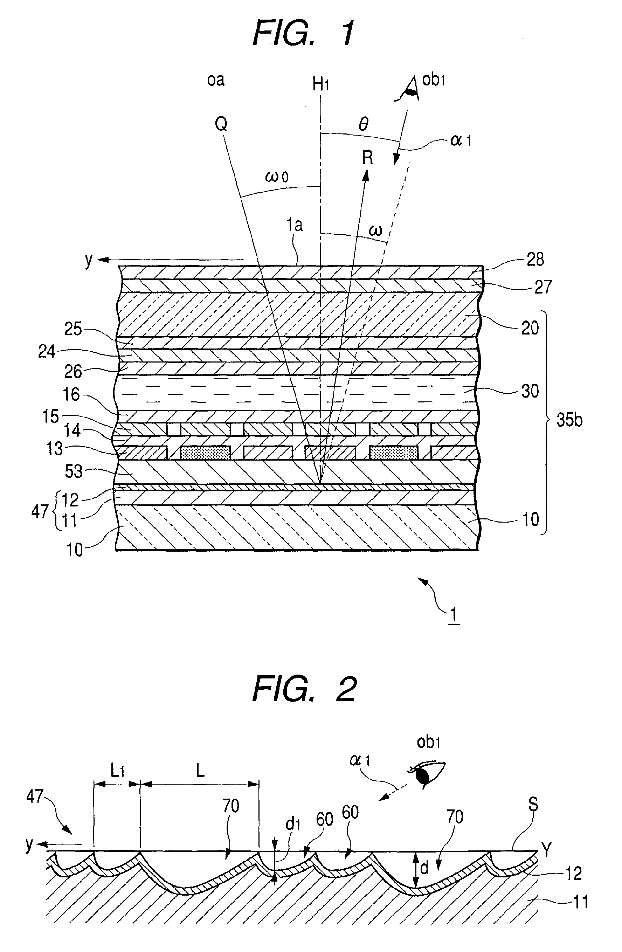

Fig. 1 schematically shows a partial cross-sectional structure of a passive matrix type reflective liquid crystal display device according to a first embodiment of the present invention.

In Fig. 1, this reflective liquid crystal display device 1 has a structure that a first substrate 10 (the other substrate far from a viewer) and a second substrate 20 (the one substrate on the side of the viewer) which are made of a transparent glass and are opposite to each other through a liquid crystal layer 30 sandwiched therebetween, are attached by sealing material (not shown) provided in the ring shape in the periphery of two substrates 10 and 20.

On the inner side (the side facing the liquid crystal layer 30) of the first substrate 10, a reflector 47, a transparent inserting layer 53 formed by request, a color filter 13 for displaying the color, an overcoat film 14 (transparent planarization layer) for flattening the irregularities caused by the color filter 13, a transparent electrode layer (electrode) 15 for driving the liquid crystal layer 30, and an alignment film 16 for controlling the orientation of the liquid crystal molecules are laminated in this order. In addition, on the inner side (the side facing the liquid crystal layer 30) of the second substrate 20, a transparent electrode layer (electrode) 25, an overcoat film 24, and a polarization film 26 are laminated in this order.

Further, the transparent electrode layers 15 and 25 having the liquid crystal layer 30 sandwiched therebetween are formed in stripe shape perpendicularly to each other and an intersection region thereof becomes a pixel to construct a passive matrix type liquid crystal display device.

A liquid crystal cell 35b is comprised of a first substrate 10, a second substrate 20, and components provided between the substrates.

On the side opposite to the side facing a liquid crystal layer 30 of the second substrate 20 (the outer side of the second substrate 20), a phase difference plate 27 and a polarization plate 28 are laminated in this order.

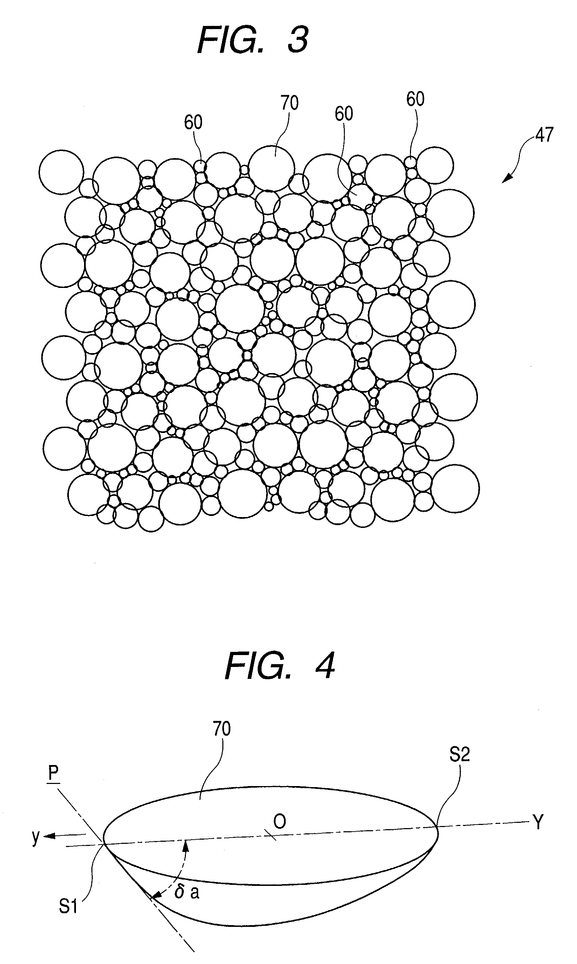

Fig. 2 is an enlarged cross-sectional view showing a portion of the reflector 47 included in the liquid crystal display device according to the present embodiment, and Fig. 3 is a plan view showing a portion of the reflector viewed from the viewing side.

This reflector 47 includes an organic film 11 and a metallic reflecting film (metal film) 12 formed on the organic film 11. The organic film 11 is provided so as to form irregularities on the metallic reflecting film 12 to efficiently scatter the reflected light.

The surface of the metallic reflecting film 12 is formed with a plurality of large-diameter concave portions 70 having light reflectivity in irregular pitches, as shown in Figs. 2 and 3, a plurality of small-diameter concave portions 60 of which the diameter is smaller than that of the large-diameter concave portion 70 are formed between the large-diameter concave portions 70. In the sectional shape of the metal film 12 of the reflector 47, the inclination of the sectional curve of the vertical section in the boundary between the concave portions is discontinuous, as shown in Fig. 2. In other words, a first-order derivative of the sectional curve of the vertical section is discontinuous.

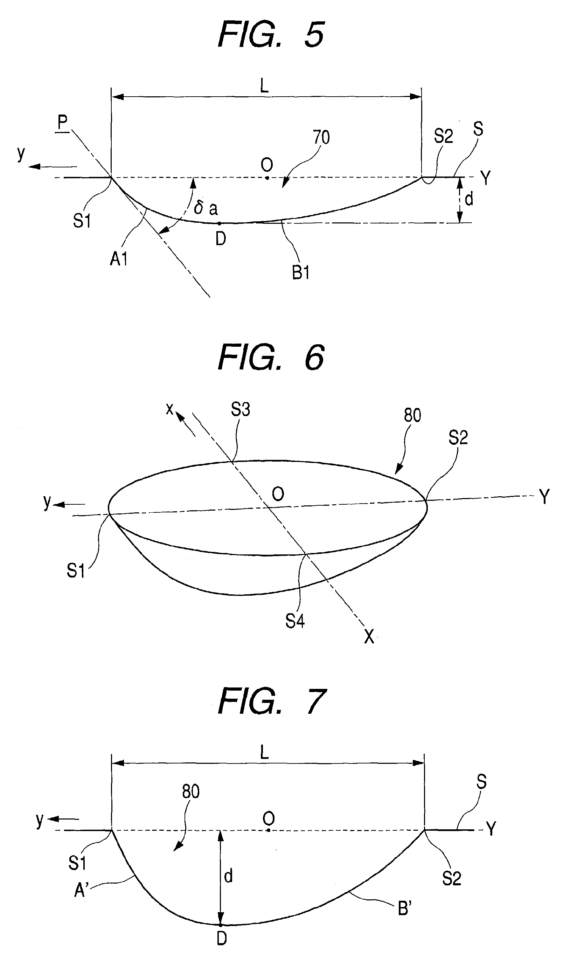

Fig. 4 is a perspective view showing one large-diameter concave portion 70 formed in the metal reflecting film 12 according to the present embodiment, and Fig. 5 is a cross-sectional view along Y-axis direction of the large-diameter concave portion 70.

The inner surface of the large-diameter concave portion 70 has a curved surface which is a portion of non-spherical surface in this embodiment, and is configured such that the reflection intensity distribution of the diffused light incident to the metallic reflecting film formed with a plurality of the large-diameter concave portions 70 at a predetermined angle (for example, 30°) becomes asymmetrical on the basis of the specular reflection angle.

Specifically, in the cross section along Y-axis direction in Fig. 5, the large-diameter concave portion 70 is comprised of a first curved surface having a small curvature and a second curved surface having a large curvature, and the first curved surface and the second curved surface have a shape shown by a first curved line A1 from one peripheral portion S1 of the large-diameter concave portion 70 to its deepest point D and a second curved line B1 from the deepest point D to the other peripheral portion S2 thereof in connection with the first curved line.

The deepest point D is in a location deviated from the center O of the large-diameter concave portion 70 to the y-direction, the average absolute values of the inclination angles of the first curved line A1 and the second curved line B1 from a horizontal plane of the substrate 10 are set to be irregularly distributed in a range of about 1° to about 89° and in a range of about 0.5° to about 88°, respectively, and the average inclination angle of the first curved line A1 is larger than that of the second curved line B1. Also, the inclination angle δa in the peripheral portion S1 of the first curved line A1 representing the maximum inclination angle is irregularly distributed in a range of about 4° to about 35°, in the large-diameter concave portion 70.

Thereby, the depth of the large-diameter concave portions 70 is irregularly distributed in a range of about 0.25 to about 3 µm. When the depth d of the large-diameter concave portion 70 is less than 0.25 µm, it is difficult to sufficiently obtain the diffusing effect of the reflected light, and, when the depth is more than 3 µm, the top thereof is not buried by the planarization film in a post-process and thus the desired flatness is not obtained. Also, when the depth d is more than 3 µm, since the thickness of the planarization film exceeds than 3 µm, the planarization film adjacent to the peripheral portion or the terminal portion of the panel is apt to be contracted or cracked in the condition of a high temperature and a high humidity.

In addition, the diameter L of the large-diameter concave portions 70 (the maximum diameter of the opening of the concave portion 70 in the Y-axis directional section in Fig. 5) is irregularly distributed in a range of about 5 µm to about 100 µm. When the diameter L of the large-diameter concave portion 70 is less than 5 µm, the process time become long by the limit of the manufacture of the base mold used to form the reflector, and, when the diameter L is more than 100 µm, it is difficult to form the shape for obtaining the desired reflection characteristics and interference light is apt to be generated. Also, the diameter L of the large-diameter concave portion 70 may be called as an indentation diameter.

Further, the pitches between the adjacent large-diameter concave portions 70 are randomly positioned, and moiré due to the interference between the array of the large-diameter concave portion 70 and another regular patterns in the liquid crystal display panel can be prevented.

Here, the term 'depth of the large-diameter concave portion' means the distance from the surface S of the portion of the metallic reflecting film 12 without concave portion to the bottom of the large-diameter concave portion. The term 'pitch between the adjacent large-diameter concave portions' means the distance between the centers of the large-diameter concave portions in the plan view.

The inner surface of the small-diameter concave portion 60 has a curved surface, which is a portion of a spherical or non-spherical surface, and the small-diameter concave portions 60 are formed between the large-diameter concave portions 70. Thus, the base of the graph representing the reflection intensity distribution of the diffused light incident to the metallic reflecting film 12 at a predetermined angle (for example, 30°) can become sufficiently wide.

Specifically, the radius of the curvature of the curved surface of the small-diameter concave portions 60 is irregularly distributed in a range of about 1 µm to about 11 µm, and the maximum inclination angle of the curved surface thereof is irregularly distributed in a range of about 15° to about 60°, and, preferably, in a range of about 18° to about 60°.

When the radius of the curvature of the curved surface of the small diameter concave portion 60 is less than 1 µm, it is difficult to perform the stable process used in the forming the reflector when forming a base mold, and, when the radius of the curvature of the curved surface is more than 11 µm, it is difficult to obtain the effect of the present invention because the shape thereof becomes equal to that of the large-diameter concave portion 70. It is preferable that the radius of the curvature of the curved surface is irregularly distributed in a range of about 1 µm to about 10 µm.

When the maximum inclination angle of the curved surface of the small-diameter concave portion 60 is less than about 15°, it is difficult to obtain the effect of the present invention because the reflection characteristics thereof become equal to that of the large-diameter concave portion 70, and, when the maximum inclination angle of the curved surface of the small-diameter concave portion 60 is more than about 60°, the reflectivity decreases.

In addition, the depth d₁ of the small-diameter concave portion 60 is irregularly distributed in a range of about 0.25 µm to about 3 µm. When the depth d₁ of the small-diameter concave portion 60 is less than 0.25 µm, it is difficult to sufficiently obtain the diffusing effect of the reflected light, and, when the depth d₁ is more than 3 µm, the peak thereof is not buried by the planarization film in the post-process and thus desired flatness is not obtained. Also, when the depth d₁ is more than 3 µm, the thickness of the planarization film also exceeds 3 µm, the reliability of the liquid crystal display device on condition of a high temperature and a high humidity is reduced.

In addition, the diameter L₁ of the small-diameter concave portion 60 (the maximum diameter of the opening of the concave portion 60 in the Y-axis directional cross section in Fig. 2) is irregularly distributed in a range smaller than that of the diameter L of the large-diameter concave portion, and, preferably, in a range of about 1.4 µm to about 14 µm. Also, the diameter L₁ of the small-diameter concave portion 60 may called as an indentation diameter.

Further, the pitches between the adjacent small-diameter concave portions 60 are randomly positioned, and moiré due to the array of the small-diameter concave portions 60 can be prevented.

Here, the term 'depth of the small-diameter concave portion' means the distance from the surface S of the portion of the metallic reflecting film 12 without the concave portion to the bottom of the small-diameter concave portion. The term 'pitch between the adjacent small-diameter concave portions' means the distance between the centers of the small-diameter concave portions in the plan view.

In the reflector 47 of the present embodiment, it is preferable that the area ratio of the plurality of large-diameter concave portions to the plurality of small-diameter concave portions is about 1:1 to about 400:1 and the total area of the plurality of large-diameter concave portions 70 is about 1 to 400 times of that of the plurality of small-diameter concave portion 60.

When the total area of the plurality of large-diameter concave portions 70 is less than that of the plurality of small-diameter concave portions 60, the reflectivity of the region having a reflection characteristic obtained by the large-diameter concave portion 70 decreases. Also, when the total area of the plurality large-diameter concave portions 70 is more than 400 times of that of the plurality of small-diameter concave portions 60, the effect for widening the base of the reflection characteristics become low.

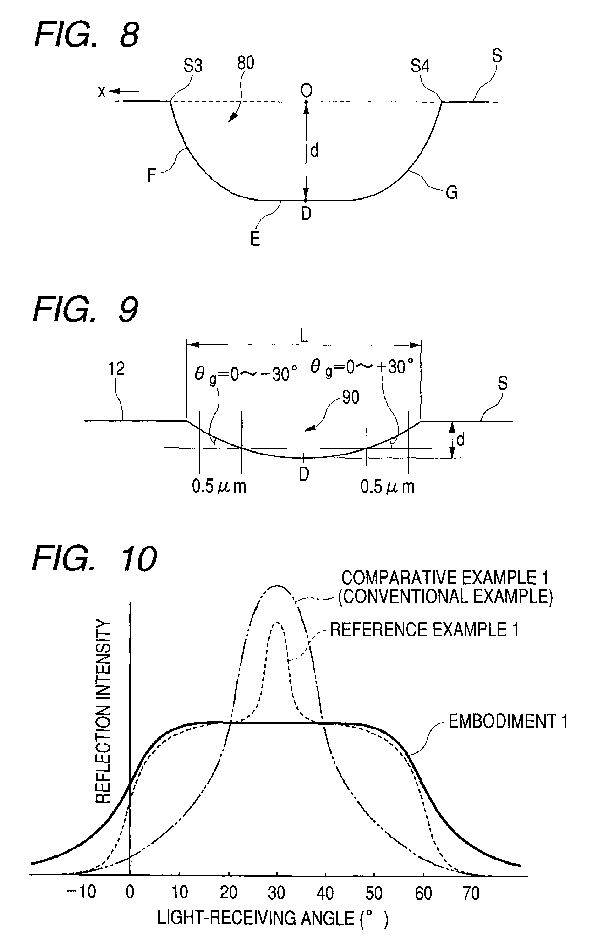

The solid line in Fig. 10 is a graph showing an example of the reflection characteristics of the above-mentioned reflector 47, and shows the relationship between a light-receiving angle θ and a reflection intensity (brightness) when irradiating the external light at the incident angle of 30° from the y-direction side toward the surface S of the metallic reflecting film and changing the viewing angle in the range of the location of - 20° to the location of 80° from the normal direction (vertical line location) of the surface S of the metallic reflecting film, on the basis of 30° that is the specular reflection direction from the surface S of the metallic reflecting film.

In addition, the size of each component of the reflector having the reflection characteristics shown in the solid line in Fig. 10 (first example) as follows:

In the plurality of large-diameter concave portions 70, the indentation diameter is irregularly distributed in a range of about 5.9 µm to about 7.7 µm, the depth d is irregularly distributed in a range of about 0.8 µm to abut 1.4 µm (the mix of 0.8 µm, 1.0 µm, 1.1 µm, 1.4 µm), the maximum inclination angle of the curved surface is irregularly distributed in a range of about 15.6° to about 20.5°, and the radius of the curvature of the curved surface is about 22 µm.

In the plurality of small-diameter concave portions 60, the indentation diameter is irregularly distributed in a range of about 3.5 µm to about 5.0 µm, the depth d₁ is irregularly distributed in a range of abut 0.6 µm to about 1.2 µm (the mix of 0.6 µm, 0.8 µm, 1.0 µm, 1.2 µm), the maximum inclination angle of the curved surface is irregularly distributed in a range of about 18.6° to about 27.0°, and the radius of the curvature of the curved surface is about 11 µm.

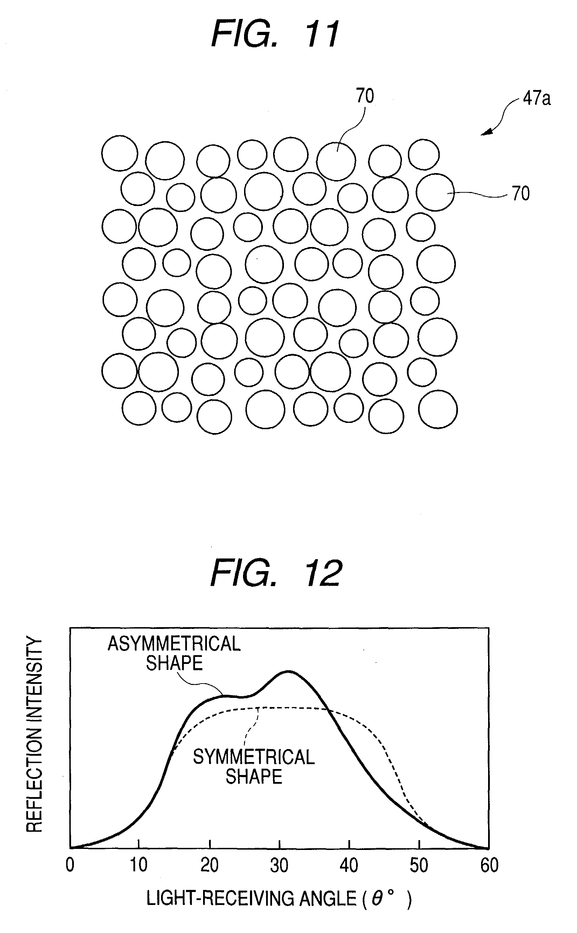

Further, in Fig. 10, the reflector 47a (reflector formed with only the plurality of large-diameter concave portion 70) shown in Fig. 11 equal to that of the first example except that the small-diameter concave portion is not formed, is shown as a first reference example, and the relationship between the light-receiving angle and the reflection intensity in the reflector 47a of this reference example is shown in a dotted line. Fig. 11 is a plan view showing a portion of the reflector 47a of the first reference example when being viewed it at the viewing side.

In addition, in Fig. 10, for comparison, the reflecting plate included in a conventional reflective liquid crystal display device shown in Fig. 14 is shown as a first comparative example, and the relationship between the light-receiving angle and the reflection intensity in the reflecting plate of the first comparative example is shown by a dashed dot line.

In the reflector of the first example in which the small-diameter concave portions are formed between the large-diameter concave portions, as shown in Fig. 10, the range in which the intensity of the reflected light of the light incident to the liquid crystal panel from the y-direction side at the angle of 30° is high is enlarged to the light-receiving angle smaller than the angle of the specular reflection direction and the light-receiving angle larger than the angle of the specular reflection direction on the basis of the light-receiving angle of 30° which is the specular reflection direction, thereby the region having a high quantity of the reflected light becomes wide, compared with the reflecting plate of the first comparative example having reflection characteristics of Gaussian distribution, and thus the reflection intensity of the light-receiving angle smaller than the specular reflection angle increases and the brightness becomes high. Also, the light-receiving angle range having the high reflected-light intensity in the reflector of the first example is wider than that in the reflector of the first reference example in which only the plurality of large-diameter concave portions are formed, and the base of the graph representing the viewing angle of the reflection intensity can become sufficiently wide.

The reflector 47 of the present embodiment has the reflection characteristics that the intensity of the reflected light becomes high in the wide angle range and the light incident thereto at various angles can be more reflected to the viewing direction to be collected.

According to the reflective liquid crystal display device 1 of the present embodiment, reflector 47 having the reflection characteristics that the intensity of the reflected light becomes high in the wide angle range and more reflecting and collecting the light incident thereto at various angles to the viewing direction is included, thereby the intensity of the reflected light can become high in the wide angle range and the display surface is bright and the visibility can be improved when being viewed from the direction close to the normal direction for the display surface of the liquid crystal display device (particularly, when the angle θ between the main viewing direction α₁ of the user and the normal direction H₁ is in a range of about 0° to about 20°).

Next, a second example having a plurality of the large-diameter concave portion formed on the metallic reflecting film of the reflector included in the liquid crystal display device of the present example will be explained with reference to Figs. 6 to 8. Fig. 6 is a perspective view of one large-diameter concave portion 80 of the second example, and Figs. 7 and 8 are Y-direction cross sectional view and X-direction cross sectional view, respectively.

The large-diameter concave portion 80 of the second example is composed by changing the shape of the inner surface of the large-diameter concave portion 70 of the reflector 47 (large-diameter concave portion of the first example) in the liquid crystal display device 1 and has directivity of the reflected light similar to the large-diameter concave portion 70.

Specifically, similar to the large-diameter concave portion 70 of the first example, the large-diameter concave portion 80 is comprised of a first curved surface having a small curvature and a second curved surface having a large curvature, and the first curved surface and the second curved surface have a shape shown by a first curved line A' from one peripheral portion S1 of the large-diameter concave portion 80 to its deepest point D and a second curved line B' from the deepest point D to the other peripheral portion S2 thereof in connection with the first curve, respectively, in the Y-direction section of Fig. 7.

This deepest point D is in the location deviated from the center O of the large-diameter concave portion 80 to y-direction, the average absolute values of the inclination angles of the first curved line A' and the second curved line B' from the surface S of the metallic reflecting film are set to be irregularly distributed in a range of about 2° to about 90° and about 1° to about 89°, respectively, and the average inclination angle of the first curved line A' is larger than that of the second curved line B1'. Also, the inclination angle δa in the peripheral portion S1 of the first curve A1 representing the maximum inclination angle in the large-diameter concave portion 80 is irregularly distributed in a range of about 4° to about 35°. Thereby, the depth of each large-diameter concave portion 80 is irregularly distributed in a range of about 0.25 µm to about 3 µm.

In addition, the diameter L of the large-diameter concave portion 80 (the maximum diameter of the opening of the concave portion 80 in the Y-axis direction cross section of Fig. 7) is irregularly distributed in a range of about 5 µm to about 100 µm.

Further, the pitches between the adjacent large-diameter concave portions 80 are randomly positioned.

On the other hand, the first curved surface and the second curved surface has a bilateral symmetric shape for the center O in the X-axis direction section shown in Fig. 8. The shape of the X-axis direction section is composed of the curved line E having a large curvature in the periphery of the deepest point D (that is, close to a straight line), and the absolute value of the inclination angle from the surface S of the metallic reflecting film is less than or equal to 10°. Also, the absolute values of inclination angles of the deep curved lines F and G from the substrate surface S are irregularly distributed in a range of about 2° to about 9°.

The solid line in Fig. 12 is a graph showing an example of the reflection characteristics of the metallic reflecting film in which the plurality of large-diameter concave portions 80 are formed (the small-diameter concave portion 60 is not formed), and shows the relationship between a light-receiving angle θ and a reflection intensity (brightness) when irradiating the light at the incident angle of 30° from the y-direction side toward the surface S of the metallic reflecting film and changing the viewing angle in the range of the location of 0° to the location of 60° from the normal direction (vertical location) of the surface S of the metallic reflecting film on the basis of 30° that is the specular reflection direction for the surface S of the metallic reflecting film.

In the metallic reflecting film in which the plurality of large-diameter concave portions 80 are formed (the small-diameter concave portion 60 is not formed), the brightness of the reflected light of the light incident to the liquid crystal display device at the angle 30° from the y-direction side is high, compared with the metallic reflecting film in which a plurality of the below-mentioned large-diameter concave portions 90 of the third example are formed (the small-diameter concave portion 60 is not formed), in the angle (near 20°) smaller than the reflecting angle of 30° which is the specular reflection direction). That is, since the deepest point D of the large-diameter concave portion 80 is deviated from the center O of the large-diameter concave portion 80 toward the y-direction side, the ratio of the light reflected at the second curved surface B' becomes larger than the light reflected at the first curved surface A', the reflection display of the side opposite to the y-direction is more bright. Also, since the adjacent region of the deepest point D of the large-diameter concave portion 80 is slowly curved, the reflection intensity of the specular reflection direction becomes high.

Then, the reflection characteristics of the reflector (second example) including the metallic reflecting film formed with the small-diameter concave portions between the large-diameter concave portions 80 can represent the reflection characteristics similar to that of the reflector 47 shown by the solid line in Fig. 10, and the range that the intensity of the reflected light of the light incident to the liquid crystal panel from the y-direction side at the angle of 30° is high is widen to the light-receiving angle smaller than the specular reflection direction and the light-receiving angle larger than the specular reflection direction on the basis of the light-receiving angle of 30° which is the specular reflection direction, thereby the region having a high quantity of reflected light becomes wide, compared with the reflecting plate of the first comparative example having reflection characteristics of Gaussian distribution, and then the reflection intensity of the light-receiving angle smaller than the specular reflection angle increases and the brightness becomes high. Also, the large reflected-light strength range of reflector of the second example is wider than that of the reflector in which only the plurality of large-diameter concave portions are formed, and thus the base of the graph representing the viewing angle of the reflection characteristics can become sufficiently wide.

Next, a third example of a plurality of large-diameter concave portions formed in the metallic reflecting film of the reflector included in the liquid crystal display device of the present embodiment will be explained with reference to Fig. 9. Fig. 9 is a cross-sectional view of one large-diameter concave portion 90 of the third example.

The large-diameter concave portion 90 of the third example is composed by changing the shape of the inner surface of the large-diameter concave portion 70 of the reflector 47 (the large-diameter concave portion of the first example) in the liquid crystal display device 1.

The inner surface of the large-diameter concave portion 90 of the third example has a curved surface which is a portion of the sphere, and the large-diameter concave portion 90 is composed such that the reflection intensity distribution of the diffused light incident to the metallic reflecting film in which a plurality of the large-diameter concave portions 90 are formed at a predetermined angle (for example, 30°) is symmetrical in the wide range, on the basis of the specular reflection angle. Specifically, the inclination angle θg of the inner surface of the large-diameter concave portion 90 is set in a range of about -30° to about 30°. Also, the diameter L of the large-diameter concave portion L may be called as an indentation diameter.

In addition, the pitches of the adjacent large-diameter concave portions 90 are randomly arranged and the moiré due to the array of the large-diameter concave portions 90 can be prevented from being generated.

Also, the diameter L of the large-diameter concave portion 27 (maximum diameter of the opening of the concave portion 90 in Fig. 9) is irregularly distributed in a range of about 5 µm to 100 µm.

In addition, the depth of the large-diameter concave portion 90 is irregularly distributed in a range of about 0.1 µm to about 3 µm. When the depth of the large-diameter concave portion 90 is less than 0.1 µm, it is difficult to sufficiently obtain the diffusing effect of the reflected light, and, when the depth is more than 3 µm, the pitch of the large-diameter concave portion 90 must become large in order to satisfy the condition of the inclination angle of the inner surface, and the moiré can be generated.

Here, the term 'depth of the large-diameter concave portion 90' means the distance from the surface S of the portion of the metallic reflecting film 12 in which the large-diameter concave portion 90 is not formed to the bottom of the large-diameter concave portion. The term 'pitch between the adjacent large-diameter concave portions 90' means the distance between the centers of the large-diameter concave portions 90 each having a circle shape in the plan view. The 'inclination angle of the inner surface of the large-diameter concave portion 90' means the angle θg from the horizontal surface of the inclination surface (surface S of the metallic reflecting film 12) in the minute range, when taking the minute range having a width of 0.5 µm in any location of the inner surface of the large-diameter concave portion 90, as shown in Fig. 9. The positive angle of the angle θg means the right inclination surface from the normal line of the surface of the portion of the metal reflecting film 12 in which the large-diameter concave portion 90 is not formed, and the negative angle thereof means the left inclination surface thereof.

The dotted line in Fig. 12 is a graph showing one example of the reflection characteristics of the metallic reflecting film in which a plurality of the large-diameter concave portions 90 are formed (the small-diameter concave portions 60 are not formed), and shows the relationship between a light-receiving angle θ and a reflection intensity (brightness) when irradiating the light at the incident angle of 30° from the y-direction side against the surface S of the metallic reflecting film and changing the viewing angle in a range of the location of 0° to the location of 60° from the normal direction (vertical location) of the surface of the metallic reflecting film on the basis of 30° that is specular reflection direction for the surface S of the metal reflecting film.

In the metallic reflecting film in which the a plurality of the large-diameter concave portions 90 are formed (the small-diameter concave portions are not formed), the maximum value of the reflection intensity becomes high to the light-receiving angle which is larger than the specular reflection angle and the light-receiving angle which is smaller than the specular reflection angle on the basis of the specular reflection angle, thereby the region having a high quantity of the reflected light is widened, compared with the reflecting plate of the conventional reflecting plate (first comparative example) having the reflection characteristics of Gaussian distribution , and thus the quantity of the reflected light of which the light-receiving angle is smaller than the specular reflection angle increases and the brightness becomes high.

Then, the reflection characteristics of the reflector (third example) having the metallic reflecting film in which the small-diameter concave portion 60 is formed between the large-diameter concave portions 90 can represent the same reflection characteristics as the reflector 47 shown by the solid line in Fig. 10, the range that the intensity of the reflected light of the light incident to the liquid crystal panel from the y-direction side at the angle of 30° is high becomes wide to the light-receiving angle smaller than the specular reflection direction and the light-receiving angle larger than the specular reflection direction on the basis of the light-receiving angle of 30° which is the specular reflection direction, thereby the region having a high quantity of reflected light becomes wide, compared with the reflecting plate of the first comparative example having the reflection characteristics of Gaussian distribution , and thus the reflection intensity of the light-receiving angle smaller than the specular reflection angle increases and the brightness becomes high. Further, the problem that the brightness is remarkably decreased when it exceeds this angle range can be removed. Also, the light-receiving angle range having the high reflected-light intensity in the reflector of the third example is wider than that in the reflector having only the plurality of large-diameter concave portions 90, and the base of the graph representing the viewing angle of the reflection intensity can become sufficiently wide.

### (Embodiment 2)

Next, the reflective liquid crystal display device according to the second embodiment of the present invention will be explained.

Fig. 13 shows a partial cross-sectional structure of the reflective liquid crystal display device according to the second embodiment.

The reflective liquid crystal display device 100 according to the second embodiment is different from the first reflective liquid crystal display device 1 shown in Figs. 1 to 3 in that a light scattering layer 29 is formed on the outer surface side of one substrate 20 which becomes the viewing side among a pair of substrates 10 and 20 forming the liquid crystal cell and the structure of the reflector provided in the liquid crystal cell is different.

The reflector 47a included in the reflective liquid crystal display device 100 of the present embodiment is comprised of an organic film 11a and a metallic reflecting film (metal film) 12a formed on the organic film 11a.

Fig. 11 is a plan view showing a portion of the reflector 47a viewed from the viewing side.

The metallic reflecting film 12a included in the reflector 47a of the present embodiment is equal to the metallic reflecting film 12 of the first embodiment, except that the small-diameter concave portions are formed between the large-diameter concave portions 70. In other words, the surface of the reflector 47a (the surface of the metallic reflecting film 12a) according to the present embodiment is formed with a plurality of the large-diameter concave portions 70 in the irregular pitch.

The metallic reflecting film 12a included in the reflector 47a of the present embodiment is formed such that the inclination of the sectional curved line of the vertical section is discontinuous in the boundary of the adjacent large-diameter concave portions 70.

The light scattering layer 29 is made by dispersing particles in the matrix made of transparent resin or transparent adhesive.

The light scattering property in the light scattering layer 29 can be controlled by changing the condition such as the material of the fine particles and the matrix and the content of the fine particles.

In the degree of light scattering in the light scattering layer 29, a haze ratio (%) is preferably in a range of about 15% to about 30%.

Here, the haze ratio is a value representing the ratio the scattering-transmittance to the total light-beams transmittance (unit: %), and becomes an index of the degree of light scattering. The value of the haze ratio in the present invention is the value obtained by the measuring method based on JIS K 7105.

The diameter of the fine particles is preferably in a range of about 1 µm to about 20 µm, and, more preferably about 3 µm to -about 15 µm. As the specific example, the particle is composed of silica, stylene butadiene copolymer, divinylbenzene, urethane resin, silicon resin, epoxy resin, or polyethylene.

In addition, as an example of the matrix, there are acrylic resin and urethane resin.

The content of the fine particles in the matrix is preferably in a range of about 0.1 mass% to about 10 mass%. When the content is less than 0.1 mass%, the effect of adding the fine particles does not appear, and, when the content is more than 10 mass%, the light scattering becomes too much large, and thus the light reflection efficiency is deteriorated to darken the screen or the contrast in the display screen is deteriorated.

The thickness of the light scattering layer 29 is preferably in a range of about 30 µm to about 200 µm. When the thickness is less than 30 µm, the light scattering effect is not sufficient, and, when the thickness is more than 200 µm, the light is too much scattered.

In the reflective liquid crystal display device 100 of the present embodiment, the reflector 47a is provided in the liquid crystal cell 35c, thereby the reflection intensity (reflectivity) of the direction of which the reflecting angle is smaller than the specular reflection angle can be improved. Also, the light scattering layer 29 is provided on the outer surface side of the liquid crystal cell 35c, thereby the light reflected at the reflector 47a is scattered when passing through the light scattering layer 29 and thus the range of the reflection angle can become wide. Therefore, according to the reflective liquid crystal display device of the present embodiment, the intensity of the reflected light can become high in the wide range, and the display surface become bright when being viewed from the direction close to the normal direction for the display surface of the liquid crystal display device and the visibility can be improved.

In addition, although the reflector for reflecting the incident light from the outside is provided between the substrate 10 and 20 in the reflective liquid crystal display device of the first and second embodiments, the reflector can be provided on the outside of the substrate 10.

In addition, although one phase difference plate is provided between the second substrate 20 and the polarization plate 28 in the first and second embodiments, a plurality of the phase difference plates can be provided.

Further, although the liquid crystal display device of the present invention is applied to the reflective liquid crystal display device in the first and second embodiments, it can be applied to the transflective liquid crystal display device. In this case, the minute opening is provided in the metallic reflecting film of the reflector 47 or the metallic reflecting film is composed of a transflective thin film and the back light unit is provided on the outer surface side of the first substrate 10.

Also, although the reflector is composed of the organic film and the metallic reflecting film (metal film) in the first and second embodiments, it may be composed by forming base material made of the metal film having the light reflectivity such as an aluminum plate, by perforating the surface of the base material by the tip of a punch to form a plurality of the concave portions, and by forming small-diameter concave portions between the large-diameter concave portion if necessary.

In addition, although one of the large-diameter concave portions of the first to third examples are employed as a plurality of the large-diameter concave portions formed in the metal reflecting film of the reflector in the first and second embodiments, the large-diameter convex portion formed on the metallic reflecting film of the reflector according to the present invention can be employed, if any one of the large-diameter concave portions of the first to third examples is formed such that the concave portion side is directed to the side of the substrate 10 (the lower side)(in other words, such that the convex portion (the side opposite to the concave portion) is directed to side of the substrate 20 (the upper side)).

Also, although the small-diameter concave portion 60 is employed as a plurality of the small-diameter concave portions formed in the metallic reflecting film of the reflector in the first embodiment, the small-diameter convex portion formed on the metallic reflecting film of the reflector according to the present invention can be employed, if the small-diameter concave portions is formed such that the concave portion side is directed to the side of the substrate 10 (the lower side)(in other words, such that the convex portion (the side opposite to the concave portion) is directed to side of the substrate 20 (the upper side)).

Also, although the passive matrix type reflective liquid crystal display device is applied in the first and second embodiments, an active matrix type liquid crystal display device using a thin film transistor or a thin film diode, or a segment type liquid crystal display device can be applied. These liquid crystal display device can be included in the present invention.

## Claims

1. A reflector having a plurality of large-diameter concave portions having light reflectivity which are formed on a surface of a base material or a metal film formed on the base material in irregular pitches, and a plurality of small-diameter concave portions each having a diameter smaller than that of the large-diameter concave portion which are formed between the large-diameter concave portions,
wherein an inner surface of the large-diameter concave portion has a curved surface which is a portion of a sphere or a non-sphere, and an inner surface of the small-diameter concave portion has a curved surface which is a portion of a sphere or a non-sphere, and
in the metal film or the base material having formed with the plurality of the large-diameter concave portions and the plurality of the small-diameter concave portions on the surface thereof, an inclination of the sectional curved line of the vertical surface between adjacent concave portions or at a boundary of the concave portions is discontinuous.

2. A reflector having a plurality of large-diameter convex portions having light reflectivity which are formed on a surface of a base material or a metal film formed on the base material in irregular pitches, and a plurality of small-diameter convex portions each having a diameter smaller than that of the large-diameter convex portion which are formed between the large-diameter convex portions,
wherein an outer surface of the large-diameter convex portion has a curved surface which is a portion of a sphere or a non-sphere, and an outer surface of the small-diameter convex portion has a curved surface which is a portion of a sphere or a non-sphere, and
in the metal film or the base material having formed with the plurality of the large-diameter convex portions and the plurality of the small-diameter convex portions on the surface thereof, an inclination of the sectional curved line of the vertical surface between the adjacent convex portions or at the boundary of the convex portions is discontinuous.

3. The reflector according to claim 1 or 2, wherein an area ratio of the plurality of the large-diameter concave portions to the plurality of the small-diameter concave portions or an area ratio of the plurality of the large-diameter convex portions to the plurality of the small-diameter convex portions is about 1:1 to about 400:1 in the metal film or the base material.

4. The reflector according to claim 1 or 2, wherein a diameter of the large-diameter concave portion or the large-diameter convex portion is in a range of about 5 µm to about 100 µm, and a thickness or a height thereof is in a range of about 0.1 µm to about 3 µm.

5. The reflector according to claim 1 or 2, wherein the inner surface of the small-diameter concave portion or the outer surface of the small-diameter convex portion has a curved surface which is a portion of a sphere or a non-sphere having a radius of a curvature of about 1 µm to 11 µm, and a maximum inclination angle of the curved surface is in a range of about 15° to 60°.

6. A liquid crystal display device comprising:
a liquid crystal cell, in which an electrode and an alignment film are provided on the inner surface of one substrate (second substrate) which is at an viewing side between a pair of opposite substrates through a liquid crystal layer sandwiched therebetween and another electrode and alignment film are provided on the inner surface of the other substrate (first substrate) far from the viewing side, and
a reflector according to Claim 1 or 2 provided between the first substrate and the alignment film provided on the inner surface thereof or on the outer surface of the first substrate.

7. A liquid crystal display device, comprising:
a liquid crystal cell, in which an electrode and an alignment film are provided on an inner surface of one substrate (second substrate) which is at an viewing side between a pair of opposite substrates through a liquid crystal layer sandwiched therebetween and another electrode and alignment film are provided on an inner surface of the other substrate (first substrate) far from the viewing side,
a reflector provided between first substrate and the alignment film provided on the inner surface thereof or on the outer surface of the first substrate, and
a light scattering layer provided on the second substrate,
wherein the reflector is formed such that a plurality of large-diameter concave portions or a plurality of large-diameter convex portions having light reflectivity are formed on a surface of a base material or on a surface of a metal film formed on the base material in irregular pitches, an inner surface of the large-diameter concave portion or an outer surface of the large-diameter convex portion has a curved surface which is a portion of a sphere or a non-sphere, and, in the metal film or the base material formed with the plurality of the large-diameter concave portions or the plurality of the large-diameter convex portions on the surface thereof, the inclination of the sectional curved line at the boundary of the adjacent concave portions or the convex portions is discontinuous, and
wherein the light scattering layer is made by dispersing fine particles in a matrix composed of transparent resin or transparent adhesive.

8. The liquid crystal display device according to claim 7, wherein a haze ratio of the light scattering layer is in a range of about 15% to about 30%.
